# EUROPEAN PATENT APPLICATION

(11) **EP 1 914 245 A1**
(43) Date of publication of application: **23.04.2008**
(21) Application number: 06781277.6
(22) Date of filing: 13.07.2006
(51) Int. Cl.: C08C 19/25, B60C 1/00, C08F 8/42, C08G 77/442, C08G 81/00, C08K 3/36, C08L 15/00, C08L 83/10

(54) **MODIFIED CONJUGATED DIENE POLYMER RUBBER AND RUBBER COMPOSITION CONTAINING THE SAME**

(30) Priority: 08.08.2005 JP 2005229655
(71) Applicant: The Yokohama Rubber Co., Ltd., Minato-ku Tokyo 105-8685 (JP)
(72) Inventor: ASHIURA, Makoto, THE YOKOHAMA RUBBER CO., LTD., Hiratsuka-shi, Kanagawa 2548601 (JP); MATSUMURA, Tomoyuki, THE YOKOHAMA RUBBER CO., LTD., Hiratsuka-shi, Kanagawa 2548601 (JP); OKUHIRA, Hiroyuki, THE YOKOHAMA RUBBER CO., LTD., Hiratsuka-shi, Kanagawa 2548601 (JP)
(74) Representative: HOFFMANN EITLE
(86) International application number: PCT/JP2006/314310
(87) International publication number: WO 2007/018018

(57) **Abstract**

A modified conjugated diene-based polymer rubber obtained by reacting, a siloxane compound having at least one ketimine group or aldimine group and at least two alkoxysilyl groups in a molecule to polymerization active ends of a polymer or copolymer obtained by solution polymerization of a conjugated diene monomer or a conjugated diene monomer and an aromatic vinyl compound monomer in the presence of an organic active metal catalyst and a rubber composition containing the modified conjugated diene-based polymer rubber and having an improved processability, heat buildup and abrasion resistance.

## Description

### TECHNICAL FIELD

The present invention relates to a conjugated diene-based polymer rubber and a rubber composition containing the same and, more specifically, relates to a modified conjugated diene-based polymer rubber capable of improving the processability, low heat buildup, and mechanical characteristics of the rubber composition, a rubber composition containing the same and a pneumatic tire using the same.

### BACKGROUND ART

Recently, the technique of using, as a rubber material for a tire, a rubber composition obtained by compounding silica or a mixture of silica and carbon black as a reinforcing filler has been generally used. A tire tread using a rubber composition containing silica has a low rolling resistance and a good steering stability as represented by the wet skid resistance, but has problems in that it is inferior in the tensile strength and the abrasion resistance. A conjugated diene-based polymer, into which a functional group having an affinity with silica has been introduced, has been proposed in order to solve the above-mentioned problems. For example, JP-A-2004-168904 proposes to bond a primary amino group and an alkoxysilyl group in a copolymer chain to provide a conjugated diolefin copolymer rubber superior in the processability and superior in the grip performance and the abrasion resistance as well as a low rolling resistance.

### DISCLOSURE OF THE INVENTION

An object of the present invention is to provide a modified conjugated diene-based polymer rubber composition usable for pneumatic tires and the like, in particular suitable for blending in a rubber composition having superior processability, low heat buildup, and mechanical characteristics (e.g., tensile strength at break and abrasion resistance) and a rubber composition containing the same.

In accordance with the present invention, there is provided a modified conjugated diene-based polymer rubber obtainable by reacting a siloxane compound having at least one ketimine group or aldimine group and at least two alkoxysilyl groups in a molecule to polymerization active ends of a polymer or copolymer obtainable by solution polymerization of a conjugated diene monomer or a conjugated diene monomer and an aromatic vinyl compound monomer in the presence of an organic active metal catalyst.

In accordance with the present invention, there is furthermore provided a rubber composition comprising 100 parts by weight of a rubber component containing said modified conjugated diene-based polymer rubber and 5 to 120 parts by weight of a reinforcing filler.

In accordance with the present invention, by compounding a modified conjugated diene-based polymer rubber obtained by reacting a siloxane compound having at least one ketimine group or aldimine group and at least two alkoxysilyl groups in a molecule to the polymerization active ends of a monomer or copolymer obtained by polymerization of a conjugated diene monomer or a conjugated diene monomer and aromatic vinyl compound monomer in the presence of an organic active metal catalyst, a rubber composition having good processability, good low heat buildup and superior mechanical characteristics (e.g., tensile strength at break and abrasion resistance) can be obtained.

### BEST MODE FOR CARRYING OUT THE INVENTION

The present inventors engaged in research in order to solve the above problems and, as a result, found that by reacting, to a siloxane compound having at least one ketimine group or aldimine group and at least two alkoxysilyl groups in a molecule the polymerization active ends of a polymer or copolymer (which is, simply referred to as a "polymer" sometimes hereinbelow) obtained by polymerization of a conjugated diene monomer or conjugated diene monomer and aromatic vinyl compound monomer in the presence of an organic active metal catalyst, in a rubber composition containing other reinforcing fillers such as silica, a good processability is provided, good viscoelastic properties correlated to low heat buildup are provided, and furthermore the mechanical characteristics such as tensile strength at break and abrasion resistance are superior.

As the conjugated diene-based monomer capable of forming the skeleton of the modified conjugated diene-based polymer of the present invention, 1,3-butadiene, isoprene, 2,3-dimethyl-1,3-butadiene, 2-chloro-1,3-butadiene, 1,3-pentadiene, and the like may be mentioned. Further, as the aromatic vinyl monomer, for example, styrene, 2-methylstyrene, 3-methylstyrene, 4-methylstyrene, α-methylstyrene, 2,4-dimethylstyrene, 2,4-diisopropylstyrene, 4-tert-butylstyrene, divinylbenzene, tert-butoxystyrene, vinylbenzyldimethylamine,(4-vinylbenzyl)dimethylaminoethylether, N,N-dimethylaminoethylstyrene, vinylpyridine, and the like may be exemplified.

As the organic active metal catalyst usable in the present invention, an organic alkali metal compound is preferably used. For example, organic monolithium compounds such as n-butyllithium, sec-butyllithium, t-butyllithium, hexyllithium, phenyllithium, stilbenelithium, dilithiomethane, 1,4-dilithiobutane, 1,4-dilithio-2-ethylcyclohexane, 1,3,5-trilithiobenzene, polyhydric lithium organic compounds; such as organic sodium compounds; sodium naphthalene and organic potassium compounds such as potassium naphthalene may be mentioned. Further, 3,3-(N,N-dimethylamino)-1-propyllithium, 3-(N,N-diethylamino)-1-propyllithium, 3-(N,N-dipropylamino)-1-propyllithium, 3-morpholino-1-propyllithium, 3-imidazole-1-propyllithium and organic lithium compounds comprising those chain elongated by 1 to 10 units of butadiene, isoprene or styrene etc. may be used.

As the siloxane compounds having at least one ketimine group or aldimine group and at least two alkoxysilyl groups in a molecule usable in the present invention, those ketiminated by reacting a carbonyl compound to polysiloxane having a primary amino group and two or more alkoxysilyl groups may be mentioned. Further, while not limited thereto, siloxane compounds having the following formula (I) or formula (II) are preferably used.

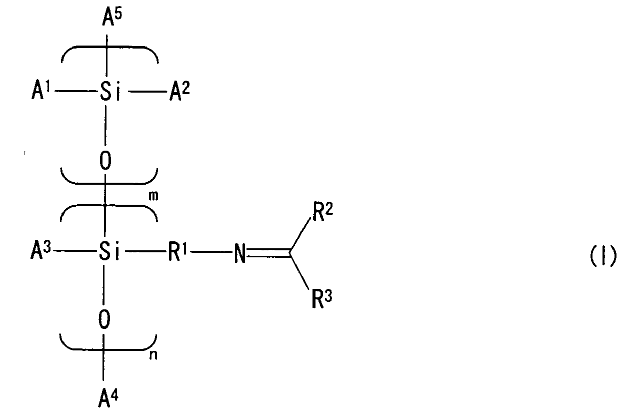

In formula (I), A¹ to A³ are independently any one of, for example, a C₁ to C₁₈ alkoxyl group, for example, a C₁ to C₁₈ alkyl group, for example, a C₆ to C₁₈ aryl group and hydrogen, R¹ is a C₁ to C₃₀ hydrocarbon group containing a straight chain, alicyclic, or aromatic group which may contain N, O, S and P, specifically a methylene group, ethylene group, propylene group, phenylene group, tolylene group or atomic groups formed by these bonded with imino bonds, ether bonds, thioether bonds and phosphine, A⁴ and A⁵ independently represent an organic group which may contain Si, 0, N or S or hydrogen or a hydroxyl group, specifically a methoxy group, ethoxy group, propoxy group, butoxy group, phenoxy group, methyl group, ethyl group, butyl group, propyl group, phenyl group, hydrogen, a hydroxyl group, trimethylsilyl group and triethylsilyl group, and R² and R³ are independently hydrogen, a C₁ to C₂₀, preferably C₁ to C₁₅ alkyl group, specifically a methyl group, ethyl group, propyl group, isopropyl group, butyl group, isobutyl group, pentyl group, isopentyl group or C₆ to C₁₈, preferably C₆ to C₁₂ aryl group, specifically a phenyl group, toluyl group, and naphthyl group, provided that R² and R³ are not simultaneously hydrogen, m is an integer of 0 to 20 and n is an integer of 2 to 20.

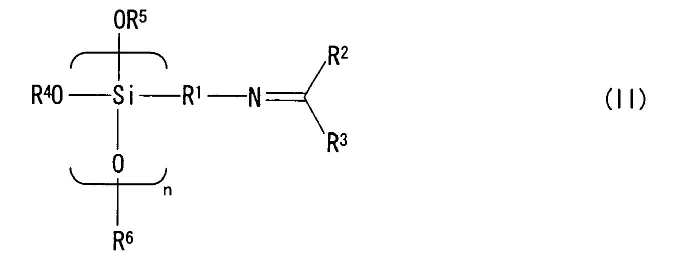

In formula (II), R¹ is a C₁ to C₃₀, preferably C₁ to C₁₈ hydrocarbon group containing a straight chain, alicyclic or aromatic ring which may contain N, O, S or P, specifically a methylene group, ethylene group, propylene group, phenylene group, tolylene group, or atomic groups formed by those bonded with imino bonds, ether bonds, thioether bonds or phosphine, R² to R⁶ are independently a C₁ to C₂₀ alkyl group, specifically a methyl group, ethyl group, propyl group, isopropyl group, butyl group, isobutyl group, pentyl group, isopentyl group or a C₆ to C₁₈, preferably C₆ to C₁₂ aryl group, specifically a phenyl group, toluyl group, naphthyl group, and the like, provided that one of R² and R³ can be hydrogen, and n is an integer from 2 to 20.

The above-mentioned siloxane compound is a compound obtainable by reacting a silane compound having a primary amino group and a carbonyl compound. As the silane compound having the primary amino group usable in the present invention, 3-aminopropyl trimethoxysilane, 3-aminopropyl triethoxysilane, 3-aminopropyl methyldimethoxysilane, 3-aminopropyl methyldiethoxysilane, N-(2-aminoethyl)-3-aminopropyl methyldimethoxysilane, N-(2-aminoethyl)-3-aminopropyl trimethoxysilane and the like can be mentioned. On the other hand, as the carbonyl compound, it is possible to preferably use acetone, methylethylketone, methylisopropylketone, methylisobutylketone, diethylketone, dipropylketone, cyclohexanone, methyl cyclohexanone, methyl cyclohexylketone, acetophenone, benzophenone and other widely used ketone compounds or methanal, ethanal, propanal, 2-methylpropanal, butanal, 2-methylbutanal, pentanal, 2-methylpentanal, benzaldehyde, toluylaldehyde, 2,4-dimethylbenzaldehyde, p-isobutylbenzaldehyde and other widely used aldehydes. In addition, tetramethoxysilane, tetraethoxysilane, diethoxydimethylsilane, dimethoxydimethylsilane, dimethoxydiphenylsilane, dimethoxymethylphenylsilane, N-dodecyltriethoxysilane, ethyltriethoxysilane, N-hexyltrimethoxysilane, methyltriethoxysilane, N-octadecyltriethoxysilane, octadecyltrimethoxysilane, pentyltriethoxysilane, pentyltrimethoxysilane and the like can be added to the above compounds and followed by reacting the same thereto.

As the siloxane compound, the use of a condensate of a siloxane compound of the formula (I), where n is a number of 2 or more, preferably 2 to 10, is preferable from the viewpoints of cold flow, processability and the like. Further, the modified conjugated diene-based polymer rubber according to the present invention reacts with the moisture (or water) coexisting or present in the atmosphere or in the environment to form primary amino groups, but a modified conjugated diene-based polymer rubber in such a state is also useful in the present invention.

Together with the siloxane compound (e.g., ketimine silane compound or aldimine silane compound) usable in the present invention, tin compounds, silicon compounds, amide compounds and/or imide compounds, isocyanate and/or isothiocyanate compounds, ketone compounds, ester compounds, vinyl compounds, oxirane compounds, thiirane compounds, polysulfide compounds, halogen compounds, fullerenes and the like can be added as a modifying agent or coupling agent.

The rubber composition according to the present invention preferably includes the modified conjugated diene-based polymer rubber in an amount of 1 to 100 % by weight, more preferably in an amount of 10 to 100 % by weight, based upon the total weight of the rubber component. If the amount of the modified conjugated diene-based polymer rubber is too small, the object of the present invention is liable to become difficult to achieve.

The other rubber components, which can be compounded into the rubber composition of the present invention can be any rubber, which can be used for a pneumatic tire. Specifically, while not limited thereto, specifically, natural rubber (NR), polyisoprene rubber (IR), styrenebutadiene copolymer rubber, various polybutadiene rubbers (BR), acrylonitrile-butadiene copolymer rubber, butyl rubber, halogenated butyl rubber, ethylene-propylene-diene copolymer rubber, ethylene-propylene copolymer rubber and the like can be mentioned.

The rubber composition according to the present invention comprises 100 parts by weight of the rubber component containing the conjugated diene-based polymer rubber, into which 5 to 120 parts by weight, preferably 10 to 100 parts by weight, of a reinforcing filler is compounded. If the amount of the reinforcing agent is small, the desired reinforcing effect is not obtained, while if conversely large, the processability becomes poor and the generation of heat becomes large, and therefore, this is not preferable. As the reinforcing filler, a part or all is preferably silica and/or a reinforcing filler at least a part of the surface of which is formed with silica (e.g., example, the silica surface-coated carbon black as described in JP-A-8-277347). As the silica, the usual dry type silica or wet type silica may be used.

The rubber composition according to the present invention may contain, in addition to the above components, the other reinforcing agents (fillers), vulcanization agents, vulcanization or cross-linking accelerators, various oils, anti-oxidants, plasticizers and other various additives which are generally compounded for tire use and other rubber compositions. Such additives are kneaded by a general method to make the composition which can be used for vulcanization. The amounts of these additives may be made the conventional generally used amounts so long as the object of the present invention is not adversely affected.

### EXAMPLES

Examples and Comparative Examples will now be used to further explain the present invention, but the scope of the present invention is not limited to these Examples.

The following starting materials were used in the Examples below.
Cyclohexane, styrene: made by Kanto Chemical Co. Inc. (used after dehydration with Molecular Sieve 4A and nitrogen bubbling)
Butadiene: made by Nippon Petrochemical Company Limited (99.3% purity product, used after dehydrated with Molecular Sieve 4A)
N-butyllithium: made by Kanto Chemical Co. Inc. (N-hexane solution of 1.58 mol/liter)
1,1,4,4-tetramethylethylenediamine (TMEDA): made by Kanto Chemical Co. Inc. (used after dehydration with Molecular Sieve 4A and nitrogen bubbling)
Toluene: made by Kanto Chemical Co. Inc. (dehydrated grade product)
Tetramethoxysilane: made by Shin-etsu Chemical Co., Ltd.
3-aminopropyltrimethoxysilane: made by Shin-etsu Chemical Co., Ltd.
Methylisopropylketone: made by Kanto Chemical Co. Inc.
Ketimine silane condensate II: made by Shin-etsu Chemical Co., Ltd. 3-(1,2-dimethylpropylidene) aminopropyltrimethoxysilane condensation oligomer (average condensation degree: 4.1)

### Examples 1 to 4 and Comparative Examples 1 to 3 (Preparation of Polymers)

### Synthesis of Ketimine Silane Condensate I

20.0 g (0.112 mol) of 3-aminopropyltrimethoxysilane and 10.7 g (0.123 mol) of methylisopropylketone were stirred under a nitrogen atmosphere at room temperature for 2 days. The methanol and the unreacted methylisopropylketone were removed from the reaction solution thus obtained in vacuo, whereby a ketimine silane condensate having an average degree of condensation of 2.4 was obtained.

### Example 1 (Production of Polymer A)

A nitrogen-substituted 10-liter internal capacity autoclave reaction vessel was charged with 3147 g of cyclohexane, 114.7 g (1.101 mol) of styrene, 438.9 g (8.114 mol) of butadiene and 0.814 mL (5.464 mmol) of TMEDA and then stirring was started. After the temperature of the contents of the reaction vessel became 50°C, 3.054 mL (4.856 mmol) of N-butyllithium was added. After the polymerization conversion rate reached 100%, 6.809 g of a 10.3 % by weight toluene solution of the above synthesized ketimine silane condensate I was added, the result and mixture was stirred for 1 hour, then 0.5 mL of methanol was added and stirred for 30 minutes, a small amount of an antioxidant (IRGANOX 1520 made by Ciba Specialty Chemicals) was added to the polymer solution thus obtained, then the solution was concentrated in vacuo to remove the solvent. The polymer was solidified in methanol, washed, then dried, whereupon a solid type polymer (Polymer A) was obtained.

### Example 2 (Preparation of Polymer B)

80 mL of water was added to 2100 g of the polymer solution obtained in the preparation of the Polymer A and the result was stirred at 90°C for 7 hours. A small amount of an antioxidant (IRGANOX 1520) was added to the polymer solution thus obtained, which was then concentrated in vacuo to remove the solvent. The polymer was solidified in methanol, washed, then dried whereby a solid polymer (Polymer B) was obtained.

### Example 3 (Preparation of Polymer C)

A nitrogen-substituted 10-liter internal capacity autoclave reaction vessel was charged with cyclohexane 4551 g, styrene 165.6 g (1.590 mol), 639.5 g (11.82 mol) of butadiene and 1.003 mL (6.729 mmol) of TMEDA and stirring was started. After the temperature of the contents in the reaction vessel became 50°C, 3.875 mL (6.084 mmol) of N-butyllithium was added. After the polymerization conversion rate became 100%, 8.232 g of a 11.2 % by weight toluene solution of the ketimine silane condensate II was added, then the resultant mixture was stirred for 1 hour. Furthermore, 0.5 mL of methanol was added and the resultant mixture was stirred for 30 minutes. A small amount of an antioxidant (IRGANOX 1520) was added into the polymer solution thus obtained which was then concentrated in vacuo to remove the solvent. The polymer was solidified in methanol, washed, then dried, whereby a solid polymer (Polymer C) was obtained.

### Example 4 (Preparation of Polymer D)

100 mL of water was added to 2500 g of the polymer solution obtained in the preparation of the Polymer C and the resultant mixture was stirred at 90°C for 7 hours. A small amount of an antioxidant (IRGANOX 1520) was added into the polymer solution thus obtained, which was then concentrated in vacuo to remove the solvent. The polymer was solidified in methanol, washed, then dried, whereby a solid polymer (Polymer D) was obtained.

### Comparative Example 1 (Preparation of Polymer E)

A nitrogen-substituted 10-liter internal capacity autoclave reaction vessel was charged with 3137 g of cyclohexane, 113.8 g (1.093 mol) of styrene, 438.9 g (8.172 mol) of butadiene and 0.812 mL (5.535 mmol) of TMEDA and stirring was started. After the temperature of the contents in the reaction vessel became 50°C, 3.330 mL (5.266 mmol) of N-butyllithium was added. After the polymerization conversion rate became 100%, 0.210 g (1.383 mmol) of tetramethoxysilane was added, the resultant mixture was stirred for one hour, then 0.5 mL of methanol was added and the resultant mixture stirred for one hour. An anti-oxidant (IRGANOX 1520) was slightly added to the obtained polymer solution which was the concentrated in vacuo to remove the solvent. The polymer was solidified in methanol, washed, then dried, whereby a solid polymer (Polymer E) was obtained.

### Comparative Example 2 (Preparation of Polymer F)

A nitrogen-substituted 10-liter internal capacity autoclave reaction vessel was charged with 3138 g of cyclohexane, 115.6 g (1.110 mol) of styrene, 438.9 g (8.172 mol) of butadiene and 0.814 mL (5.464 mmol) of TMEDA and stirring was started. After the temperature of the contents in the reaction vessel became 50°C, 3.805 mL (5.936 mmol) of N-butyllithium was added. After the polymerization conversion rate became 100%, 0.5 mL methanol of was added and the resultant mixture was stirred for 30 minutes. A small amount of an antioxidant (IRGANOX 1520) was added into the polymer solution thus obtained, which was concentrated in vacuo to remove the solvent. The polymer was solidified in methanol, washed, then dried, whereby a solid polymer (Polymer F) was obtained.

### Comparative Example 3 (Preparation of Polymer G)

The same procedure was followed as in the case of the Polymer G to obtain the Polymer G shown in Table I, except for making the amount of N-butyllithium added half.

**Table I**

| | Ex. 1 | Ex. 2 | Ex. 3 | Ex. 4 | Comp. Ex.1 | Comp. Ex.2 | Comp. Ex.3 |
|---|---|---|---|---|---|---|---|
| Polymer | A | B | C | D | E | F | G |
| Styrene content (wt%)^{*1} | 20.0 | 20.0 | 21.7 | 21.7 | 21.0 | 21.3 | 21.7 |
| Vinyl content (mol%)*¹ | 60.3 | 60.3 | 66.0 | 66.0 | 59.6 | 59.4 | 60.2 |
| Weight-average molecular weight^{*2} | 336000 | 385000 | 314000 | 390000 | 354000 | 201000 | 396000 |
| Coupling rate (%) ^{*2} | 42 | 53 | 23 | 43 | 46 | - | - |
| Modifying agent | I^{*3} | Water treatment of A | II ^{*4} | Water treatment of C | TMS^{*5} | None | None |

| | | | | | | | |
|---|---|---|---|---|---|---|---|
| *1: Calculated by ¹H-NMR *2: Calculated by GPC *3: Ketimine silane condensate I *4: Ketimine silane condensate II *5: Tetramethoxysilane | | | | | | | |

### Examples 5 to 8 and Comparative Examples 4 to 6 Preparation of Samples

In each formulation (parts by weight) shown in Table II, the components other than the vulcanization accelerator and sulfur were mixed by a 0.6 liter internal mixer for 5 minutes. The master batch thus obtained was mixed with the vulcanization accelerator and sulfur shown in Table II by an 8-inch open roll to obtain a rubber composition and the Mooney viscosity thereof was measured. Next, this composition was press-vulcanized in a mold having a size of 15×15×0.2 cm and a mold for Lambourn abrasion at 160°C for 30 minutes to obtain a rubber sheet and a sample for abrasion resistance testing. The physical properties were measured by the following methods. The results are shown in Table III.

Mooney viscosity (ML₁₊₄ (100°C)): measured according to JIS K-6300. The lower the value, the more superior the mixing processability.

Tensile strength at break (MPa): measured according to JIS K6251.

Viscoelasticity (tanδ): measured using a viscoelastic spectrometer made by Toyo Seiki Seisakusho, Ltd. at a temperature of 60°C, an initial strain of 10%, amplitude of ±2% and a frequency of 20Hz. The smaller the value, the smaller the generation of heat.

Abrasion resistance: measured using a Lambourn abrasion tester according to JIS K6264 under conditions of a load of 15N and a slip ratio of 50%. The results were shown indexed to (abrasion amount of Comparative Example 5)×100/(abrasion amount of the sample) as 100. The larger the indexed value, the better the abrasion resistance.

Note that Comparative Example 5 blends a polymer having a molecular weight equal to the coupling body and a polymer having a molecular weight equal to the original polymer so as to obtain an equivalent distribution of molecular weight of the polymer with other Examples.

**Table II**

| Formulation (parts by weight) | | Ex. 5 | Ex. 6 | Ex. 7 | Ex. 8 | Comp. Ex. 4 | Comp. Ex. 5 | Comp. Ex. 6 |
|---|---|---|---|---|---|---|---|---|
| Polymer | SBR-A*¹ | 100 | - | - | - | - | - | - |
| | SBR-B*² | - | 100 | - | - | - | - | - |
| | SBR-C*³ | - | - | 100 | - | - | - | - |
| | SBR-D*⁴ | - | - | - | 100 | - | - | - |
| | SBR-E*⁵ | - | - | - | - | 100 | - | - |
| | SBR-F*⁶ | - | - | - | - | - | 60 | - |
| | SBR-G*⁷ | - | - | - | - | - | 40 | - |
| | SBR-E*⁸ | - | - | - | - | - | - | 100 |
| Compounding agent | Silica*⁹ | 50 | 50 | 50 | 50 | 50 | 50 | 50 |
| | Zinc oxide ^{*10} | 3.0 | 3.0 | 3.0 | 3.0 | 3.0 | 3.0 | 3.0 |
| | Stearic acid*¹¹ | 1.0 | 1.0 | 1.0 | 1.0 | 1.0 | 1.0 | 1.0 |
| | Antioxidant*¹² | 1.0 | 1.0 | 1.0 | 1.0 | 1.0 | 1.0 | 1.0 |
| | Silane coupling agent*¹³ | 5.0 | 5.0 | 5.0 | 5.0 | 5.0 | 5.0 | 5.0 |
| | Aroma-based, oil*¹⁴ | 5.0 | 5.0 | 5.0 | 5.0 | 5.0 | 5.0 | 5.0 |
| Vulcanization agent | Vulcanization accelerator CZ*¹⁵ | 1.7 | 1.7 | 1.7 | 1.7 | 1.7 | 1.7 | 1.7 |
| | Vulcanization accelerator DPG*¹⁶ | 2.0 | 2.0 | 2.0 | 2.0 | 2.0 | 2.0 | 2.0 |
| | Sulfur*¹⁷ | 1.4 | 1.4 | 1.4 | 1.4 | 1.4 | 1.4 | 1.4 |

| | | | | | | | | |
|---|---|---|---|---|---|---|---|---|
| Footnotes of Table II *1 to *7: Polymers A to G prepared in Examples 1 to 4 and Comparative Examples 1 to 3 *8: Nipol NS116 (made by Japan Zeon Corporation) *9: Ultrasil 7000 GR (made by United Silica Industrial Ltd.) *10: Zinc Oxide No. 3 (made by Seido Chemical Industry Co., Ltd.) *11: Bead Stearic acid "Kiri" (made by NOF Corporation) *12: Santoflex 13,6C (made by Monsanto Japan Ltd.) *13: bis-(3-triethoxysilyl-propyl)tetrasulfide (Si69)(made by Degussa) *14: Extract No. 4S (made by Showa-Shell Sekiyu K.K.) *15: Nocclear CZ-G (made by Ouchi Shinko Chemical Industrial Co., Ltd.) *16: Soxinol D-G (made by Sumitomo Chemical Co., Ltd.) *17: Sulfur (made by Tsurumi Chemical Co., Ltd.) | | | | | | | | |

**Table III**

| | Ex. 5 | Ex. 6 | Ex. 7 | Ex. 8 | Comp. Ex. 4 | Comp. Ex. 5 | Comp. Ex. 6 |
|---|---|---|---|---|---|---|---|
| Processibility (Mooney viscosity) (ML₁₊₄) | 70 | 72 | 74 | 73 | 85 | 75 | 88 |
| Tensile test (Strength at break) (MPa) | 15.2 | 17.3 | 16.0 | 17.6 | 14.2 | 13.9 | 13.1 |
| Viscoelasticity tanδ (60°C) | 0.099 | 0.094 | 0.096 | 0.090 | 0.126 | 0.176 | 0.140 |
| Abrasion resistance (index) | 121 | 124 | 120 | 123 | 112 | 99 | 100 |

### INDUSTRIAL APPLICABILITY

As explained above, according to the present invention, by compounding a modified conjugated diene-based polymer rubber obtained by reacting a ketimine silane compound or an aldimine silane compound to polymerization active ends obtained by polymerization of a conjugated diene monomer or a conjugated diene monomer and an aromatic vinyl compound in the presence of an organic active metal catalyst, a rubber composition having superior processability, low heat buildup, strength at break, abrasion resistance and the like can be obtained, and, therefore, this is useful for use as for example, a tread, undertread, carcass, sidewalls, beads and the like of a pneumatic tire.

## Claims

1. A modified conjugated diene-based polymer rubber obtainable by reacting, a siloxane compound having at least one ketimine group or aldimine group and at least two alkoxysilyl groups in a molecule to polymerization active ends of a polymer or copolymer obtainable by solution polymerization of a conjugated diene monomer or a conjugated diene monomer and an aromatic vinyl monomer in the presence of an organic active metal catalyst.

2. A modified conjugated diene-based polymer rubber as claimed in claim 1, wherein said siloxane compound is a compound having the formula (I): 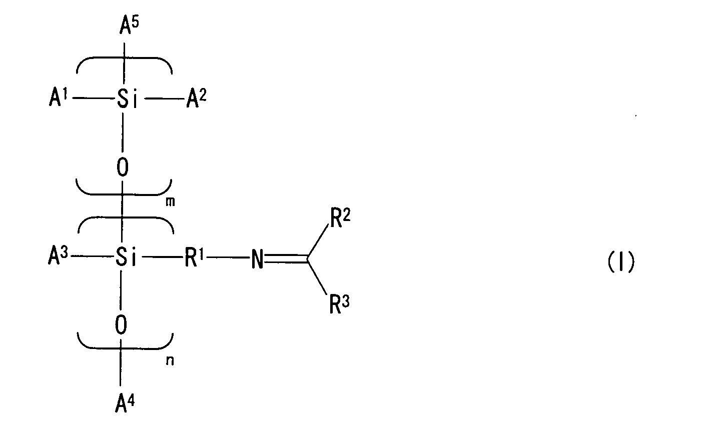 where, in the formula (I), A¹ to A³ are, independently, any one of an alkoxyl group, alkyl group, aryl group and hydrogen, R¹ is a C₁ to C₃₀ hydrocarbon group containing a straight chain, alicyclic, or aromatic group which may contain N, O, S and P, A⁴ and A⁵ are, independently, organic groups which may contain Si, O, N, and S, R² and R³ are independently hydrogen, a C₁ to C₂₀ alkyl group or C₆ to C₁₈ aryl group, provided that R² and R³ cannot simultaneously be hydrogen, m is an integer of 0 to 20 and n is an integer of 2 to 20.

3. A modified conjugated diene-based polymer rubber as claimed in claim 2, wherein said siloxane compound is a compound having the formula (II): 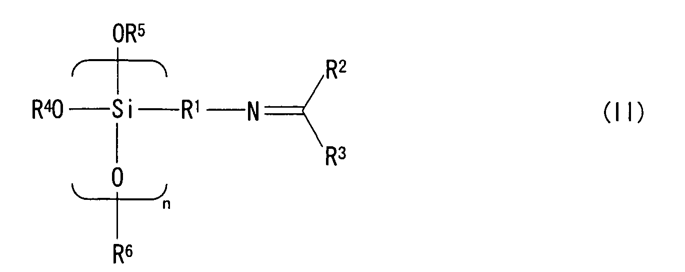 where, in the formula (II), R¹ is a C₁ to C₃₀ hydrocarbon group containing a straight chain, alicyclic or aromatic group which may contain N, O, S and P, R² to R⁶ are, independently, a C₁ to C₂₀ alkyl group or a C₆ to C₁₈ aryl group, either of R² and R³ can represent hydrogen and n is an integer of 2 to 20.

4. A conjugated diene-based polymer rubber obtainable by reacting a conjugated diene-based polymer rubber according to any one of claims 1 to 3 and a moisture.

5. A rubber composition comprising 100 parts by weight of a rubber component containing a conjugated diene-based polymer rubber according to any one of claims 1 to 4 and 5 to 120 parts by weight of a reinforcing filler.

6. A rubber composition as claimed in claim 5, wherein a part or all of the reinforcing filler is silica and/or a reinforcing agent at least a part of the surface of which is formed with silica.

7. A pneumatic tire using a rubber composition according to claim 5 or 6.
